# EUROPEAN PATENT SPECIFICATION

(11) **EP 0 486 090 B1**
(45) Date of publication and mention of the grant of the patent: **30.08.1995**
(21) Application number: 91202859.4
(22) Date of filing: 05.11.1991
(51) Int. Cl.: G09G 5/02, G09G 5/06

(54) **Display method and apparatus**
Anzeigeverfahren und -einrichtung
Méthode et dispositif d'affichage

(30) Priority: 14.11.1990 GB 9024712
(43) Date of publication of application: 20.05.1992
(73) Proprietor: PHILIPS ELECTRONICS UK LIMITED, Croydon CR9 3QR (GB); Philips Electronics N.V., 5621 BA Eindhoven (NL)
(72) Inventor: Penna, David Edward, Redhill, Surrey RH1 5HA (GB)
(74) Representative: White, Andrew Gordon

(56) References cited:
- EP-A- 0 399 783
- EP-A- 0 419 126
- US-A- 4 849 746

## Description

The invention relates to apparatus for displaying on a pixel grid image frames representing a foreground image moving over a background image, the movement between frames including a fractional part of the dimensions of a pixel, the apparatus comprising:
- a display memory storing colour codes for the pixels of the foreground image, the display apparatus operating to display the foreground image in the form of pixels coloured in accordance with the stored colour codes;
- means for identifying leading and trailing edge pixels of the foreground image, in accordance with the movement between frames; and
- means for modifying the displayed colour of the leading and trailing edge pixels in accordance with the fractional part of the movement.

The invention further relates to a method of pre-storing foreground image data for use in such an apparatus.

If a foreground image is scrolled over a background image on a raster scanned display or on a display device such as a liquid crystal display which consists of a plurality of discrete picture elements (pixels) then in certain circumstances a jerky motion will be perceived by the viewer. An example is where the foreground image is being scrolled vertically at a rate of three lines per second and the display refresh rate is 30Hz. Ideally the foreground image should move up (or down) one tenth of a line each frame, but in a conventional raster scanned or LCD display this is not possible. As a result the foreground image will jump one line three times a second. This updating rate is such that the jump will be clearly observable by the viewer and may be annoying or discomforting to view. Of course other scrolling rates will cause such jumps to occur at different rates. The same result will also occur for horizontal scrolling if the display information relates to lines of individual pixels.

To achieve smooth vertical scrolling of text in a teleprompter system, US 4,849,746 (Dubner) describes a display apparatus of the type set forth in the opening paragraph. By modifying edge pixel colours, in particular by mixing foreground and background image colours at the edges, an illusion of sub-pixel movement can be created, resulting in very smooth scrolling.

The Dubner apparatus operates by examining pixel locations on two adjacent lines for every displayed pixel, blending pixel colours when top and bottom edges are detected. This approach is very hardware intensive and not suitable for use in low-cost equipment, for example a home computer or Compact Disc-Interactive (CD-I) player. Moreover, in the CD-I player, image data for text and graphics are often stored in compressed form, for example by run-length coding. Thus adopting the Dubner technique in a CD-I player would require an additional real-time decoder, or a line buffer for decoded pixel values. Moreover, the specific hardware of the Dubner apparatus is restricted to vertical scrolling only.

See also EP-A 0 399 783 which was however not published before the priority date of the present application.

It is an object of the present invention to enable smooth movement to be represented for text and other images in a manner which can be implemented at low cost, for example in a home computer or CD-I player.

In accordance with the present invention there is provided an apparatus for displaying on a pixel grid image frames representing a foreground image moving over a background image, the movement between frames including a fractional part of the dimensions of a pixel, the apparatus comprising a display memory storing colour codes for the pixels of the foreground image, the stored colour codes defining displayed pixel colours by reference to entries in a colour look-up table (CLUT) of the apparatus, and the display apparatus operating to display the foreground image in the form of pixels coloured in accordance with the stored colour codes; means for identifying leading and trailing edge pixels of the foreground image, in accordance with the movement between frames, wherein the edge pixels are identified by stored colour codes distinct from those stored for other (non-edge) pixels in the foreground image; and means for modifying the displayed colour of the leading and trailing edge pixels in accordance with the fractional part of the movement, by updating the CLUT entries for the edge pixel colour codes between frames; characterised in that colour codes for the foreground image pixels are pre-stored including the distinct colour codes for edge pixels, and transferred to the display memory prior to display. A colour look-up table is already provided in most low-cost display apparatuses, and its use in accordance with the invention allows the display of smoothly scrolling images with no special hardware. Moreover, the edge pixels need be identified only once for a whole succession of frames, and a simple updating of the CLUT entries then modifies the colour of all edge pixels for the following frame or part of a frame. The distinct colour codes can be represented in compressed form if desired.

In a particular embodiment, the colour codes for the foreground image pixels may be pre-stored in another part of the display apparatus' memory, for example RAM, ROM or CD-ROM.

Such an embodiment can be particularly useful where the foreground image comprises a compilation from a set of component parts, the colour codes being pre-stored for the set of component parts and being transferred selectively to assemble the foreground image in the display memory. The detection of edge pixels need be done only once for each component part. For the display of scrolling text, the pre-stored component parts may comprise a set of character shapes.

Leading and trailing edge pixels can be identified for vertical movement and horizontal movement, if required. For vertical or horizontal movement only, distinct colour codes are required for two classes of edge pixels, plus the non-edge pixels. For movement in both horizontal and vertical directions, four classes of edge pixels (top, bottom, left and right) require distinct colour codes. For diagonal movement, four further colour codes may be assigned to corner pixels.

The invention further provides a method for pre-storing foreground image data for use in an apparatus as described above, the method comprising:
- receiving information identifying the pixels of at least a component part of the foreground image;
- detecting leading edge and trailing edge pixels for at least one direction of movement of the foreground image;
- assigning distinct colour codes to the leading edge pixels, the trailing edge pixels and non-edge pixels of the foreground image; and
- storing the colour codes for the pixels of the foreground image, as colour codes for a set of foreground image component parts, in a memory for use in the display apparatus.

The memory may be a background memory which is part of the display apparatus, or may be removable mass memory such as a CD-ROM.

In particular, the colour codes pre-stored for a set of foreground image component parts, may for example be text character shapes.

The above and other features of the invention will become apparent from an embodiment of the invention which will now be described, by way of example, with reference to the accompanying drawings, in which:
Figure 1 shows in block schematic form apparatus according to the invention for displaying a foreground image over a background image,
Figure 2 shows a sequence of shapes as they appear in successive frames on a display when being scrolled over a background.
Figure 3 shows an example of a background image,
Figure 4 shows an example of a foreground image,
Figure 5 is a flow diagram illustrating a method of determining edge pixels of foreground shapes to be scrolled, and
Figure 6 is a flow diagram illustrating the determination of edge pixel colours.

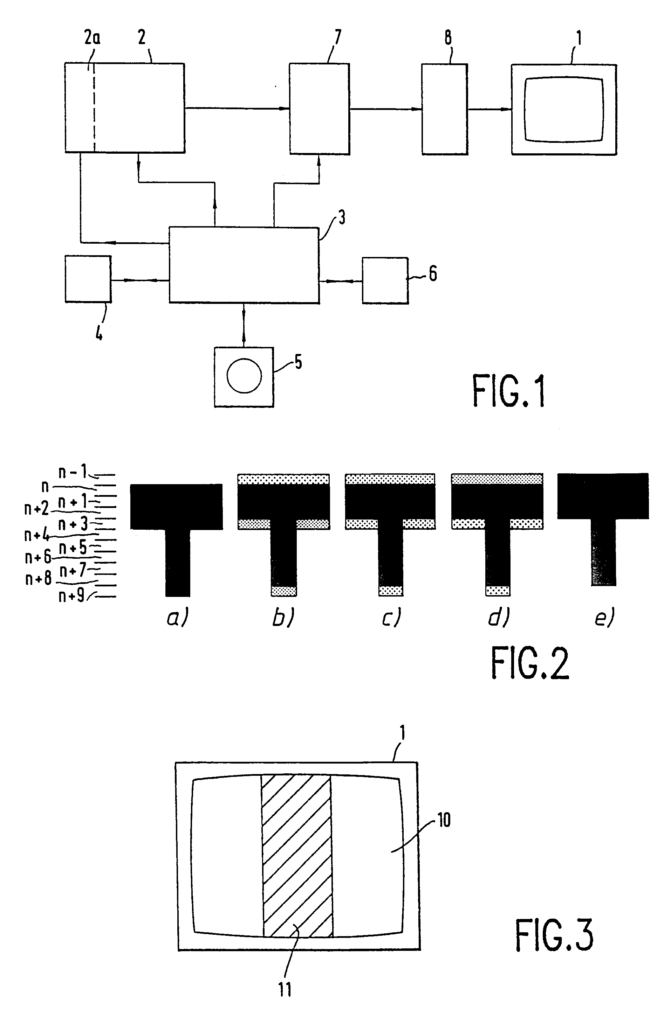

Figure 1 shows an embodiment of apparatus for carrying out the invention which comprises a display device 1 which may be a conventional raster scanned cathode ray tube television monitor or could be a liquid crystal or other display device. A first block of memory 2 forms a display memory which stores a picture to be displayed in digital form and may for example be arranged as an array of 1024 by 256 storage locations each of which stores a picture element (pixel). The memory 2 also includes a scroll offset register 2a which defines the start position of each display frame, that is the position in the memory 2 where the first line to be displayed is located. A central processor unit (CPU) 3 controls the writing of data into the memory 2 and the reading of data from the memory 2. The CPU 3 has associated with it a block of memory 4 which contains the operating programs and a mass storage 5 which may take the form of an optical disc. The CPU 3 also has associated with it a user input device 6 which may take the form of a mouse or tracker ball. Other input devices such as keyboards or tablet and stylus could also be used. The memory 2 is connected to a colour look up table (CLUT) 7 and then via a digital to analogue converter 8 to the display device 1. Apparatus similar to that shown in Figure 1 could be implemented in a compact disc interactive (CD-I) player.

The operation of the apparatus shown in Figure 1 will be described with reference also to Figure 2 which illustrates how vertical scrolling is achieved using the inventive concept disclosed herein.

As has been discussed in the introduction vertical scrolling of a picture in a raster scanned display results in the scrolling not appearing to be smooth if the scrolling rate does not result in the movement of the picture by an integral number of lines or pixels per frame. This is due to the line structure of the display. When using a CRT as the display device scrolling in the horizontal (or line) direction would not cause this effect unless the picture is derived from a digital frame store in which case the same effect would occur due to the sampled nature of the picture elements (pixels) along each line. With a display such as a liquid crystal display which is made up from discrete elements the effect will occur in both directions regardless of the source of the picture information.

If it is assumed that the picture to be scrolled comprises black shapes on a white background, for example lines of text, then a visual illusion of smooth vertical motion can be achieved by manipulating the brightness of the lines at the top and bottom edges of the shapes being displayed. This is illustrated in Figure 2. As shown in Figure 2a the top of the shape is located on scan line n while the bottom of the bar of the T is on scan line n+3 and the bottom of the upright of the T is on scan line n+9. All the pixels within the shape are of one colour, in this case black, and have the same luminance value. Figure 2b illustrates the situation in the next frame where the shape is to be upwardly scrolled by a quarter of the line width. This cannot, of course, be achieved in practice due to the line structure of the picture but an illusion can be created by causing line n-1 to take three quarters of the background colour and one quarter of the foreground colour and causing line n+3 where it forms the bottom edge of the shape and line n+9 to take three quarters of the foreground colour and one quarter of the background colour. Thus for black foreground (letter T) and white background line n+1 is three quarters white and lines n+3 and n+9 are three quarters black. In the next frame, as shown in Figure 2c, the shape is to be upwardly scrolled by half the line width. In this case lines n-1, n+3, and n+9 are each formed as half background and half foreground. The next frame, illustrated in Figure 2d, corresponds to the shape being upwardly scrolled by three quarters of the line width. In this case line n-1 is three quarter black and lines n+3 and n+9 one quarter black. On the next frame the shape has scrolled upwardly through a whole line width and consequently all pixels within the shape are black (the foreground colour).

This scheme is equally applicable where the foreground and background colours are not black and white, for example two shades of grey on a monochrome display or two different colours on a colour display. It is merely necessary to mix the appropriate proportions of the background and foreground colours or luminance values.

The effect of changing the luminance levels of the top and bottom edges of the shape as described is to make the shape appear to move up four times by quarter line steps i.e. a quarter line step each frame, rather than simply jumping from one line to the next every four frames. This improves the perceived smoothness of the scrolling. By appropriately choosing the mixing values this scheme can easily be adapted to any scrolling rate.

In order to achieve this method of scrolling of shapes four (or more generally n, where n is an integer) copies of the data may be held. This quadruples (or multiplies by n) the amount of storage required and may cause greater processing costs in producing and/or loading the extra data. Alternatively the data is altered at considerable processing cost. Depending on the contents of the display many pixels may need to be altered and there may be considerable processing costs in deciding which pixels are immediately above a top edge or on the bottom edge of the shapes.

The method can be more usefully carried out using a CLUT based display system by causing the image to be written using a first CLUT code for most of each shape, a second CLUT code for the background, a third CLUT code for pixels which define the bottom edge of the shape (bottom edge pixels), and a fourth CLUT code for all background pixels immediately above top edge of the shape (top edge pixels). As the shape is scrolled vertically then the relative luminance values of these top and bottom edge pixels all over the picture can be altered merely by altering two CLUT entries, that is those for the top and bottom edge pixels. This of course assumes that the background is constant and the shapes are also of uniform colour. Thus for this simple arrangement a CLUT having four storage locations is all that is required. One storage location will hold the foreground (shape) colour, one the background colour, one the top edge pixel colour, and the other the bottom edge pixel colour. The latter two CLUT values need to be updated each frame in accordance with the scrolling rate. For example with reference to Figure 2 and taking Figures 2a to 2e as representing frames 1 to 5: in frame 1 the top edge pixel will be 100% background and the bottom edge pixel 100% foreground; in frame 2 the top edge pixel will be 75% background and 25% foreground while the bottom edge pixel will be 75% foreground and 25% background; in frame 3 both the top edge and bottom edge pixels will be 50% foreground and 50% background; and in frame 4 the top edge pixel will be 75% foreground and 25% background and the bottom edge pixel will be 25% foreground and 75% background. In frame 5 the top edge pixel will revert to 100% background and the bottom edge pixel to 100% foreground with the above sequence being repeated while scrolling at that rate continues. The sequence of CLUT values is calculated by the microprocessor from the required scrolling rate.

Clearly other scrolling rates are possible including those which do not give an integral number of frame periods between line width intervals. This will have the effect of producing a variable number of frame periods between effective movement of the shape by a line and the microprocessor will have to calculate the number of frames between each shift and then the appropriate proportions to mix the background and foreground colours for the edge pixels.

It should be noted that the method would perform equally well if the top edge pixels were defined as those pixels which define the top edge of the shape and the bottom edge pixels were defined as the background pixels immediately below the edge of the shape.

Downward scrolling can be achieved by reversing the sequence of operations required for upward scrolling using either definition of top and bottom edge pixels. Horizontal scrolling, either from left to right or from right to left can be achieved in essentially the same manner by providing left and right edge pixels which have their colours written in CLUT codes as with the top and bottom edge pixels. Consequently if both up/down and left/right scrolling are required then a minimum of four CLUT codes in addition to the foreground and background CLUT codes are necessary. This minimum, however, does not satisfactorily cope with the situation of simultaneous scrolling horizontally and vertically (and hence in effect diagonally) since there are then pixels which were part of two edges, left and top for example, and if written as one of the edges would be incorrect for the other direction of scrolling. To allow for this four further CLUT codes would be necessary to handle the four possible diagonal directions.

It can be seen that a comparatively straightforward method can be adopted where the background is of a constant colour and luminance (brightness) and the foreground is also of a (different) constant colour and luminance. However the situation is more complex if the edges of the shapes are antialiased since, with black and white, there may be grey level pixels already embedded in the edges of the character shapes. Where the luminance contrast between pixels is not high then the non smooth scrolling effect will not be so pronounced and it may be possible to ignore it. Where there is a high contrast between the edge pixel and the background or between an edge pixel whose luminance has been reduced to give edge antialiasing to the shape and an adjacent full shape colour pixel then further processing may be desirable. By providing further CLUT locations which can be loaded with selected colour values which relate to particular mixtures of foreground and background colours these antialiased pixels may be processed. To limit the number of CLUT entries required it may be necessary to select particular background/foreground mixtures and to allocate any given antialiased pixel to the nearest of these mixtures.

It is possible to use the method to process either black and white images or coloured images. For simplicity most the description refers to black and white images but it will be clear to the person skilled in the art that black and white can be replaced by two different colours or a single colour having two luminance levels.

The description thus far has assumed a constant colour for the background and a different constant colour for the foreground shapes. This is a common occurrence when scrolling text but if the background is not a plain colour then blending of the character colour into background colour will not be ideal since the CLUT codes assume a single background colour. In some cases the background may have a textured pattern which does not vary very much in colour and in this case an average colour could be used as the background colour. Since the human eye is most sensitive to brightness variations rather than variations in hue or saturation the method could still be used for backgrounds which have substantial hue or saturation variations but which have a substantially uniform perceived brightness.

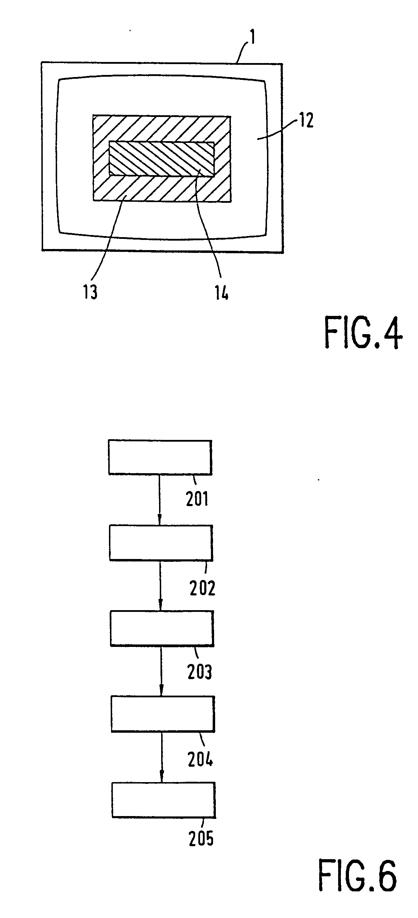

If the background is known and consists of a limited number of large uniformly coloured areas having different respective colours smoothing the vertical or horizontal scrolling could be achieved using further sets of CLUT codes relating to each of the areas. An example is shown in Figure 3 where the background consists of a vertical stripe 11 and an otherwise constant background 10, the colour of the stripe 11 differing from that of the rest of the background 10. In this instance with vertical scrolling different CLUT codes are allocated to the vertical stripe and background.

A further possibility is when a shape being scrolled has two contrasting areas of colour. As shown in Figure 4 the shape 13 on background 12 has a block 14 of different colour within it. This can be handled by repeating the process where the boundary between the two colour blocks occurs. This will, of course, require further CLUT entries.

Some systems such as CD-I allow the CLUT entries to be changed as the scan proceeds down the display screen. This allows the invention to be used with a background which changes colour with vertical position i.e. consists of horizontal colour bands or a smooth change of colour from top to bottom.

In the case of vertical scrolling where the pixel to be modified are those immediately above the top edge of the scrolled shape and those at the bottom edge of the scrolled shape it is necessary to identify the relevant pixels and arrange for them to be written in different CLUT code. This can be achieved by scanning the picture and determining for each pixel whether it is foreground or background. Where one pixel is foreground and its neighbour is background a shape edge is detected. Considering vertical pairs of pixels and the scheme as illustrated in Figure 2 then if the upper pixel is background and the lower pixel is foreground then the upper pixel should be written in top edge CLUT code. Similarly if the upper pixel is foreground and the lower pixel is background then the upper pixel should be written in bottom edge CLUT code. This process is time consuming but only has to be carried out once and the image can then be scrolled without repeating the computation. If the image is built up out of component parts then the process can be carried out on the stored component parts, for example the set of alpha numeric characters when scrolling text, so that when the composite image is formed no further computation is required provided that the shapes do not touch or overlap.

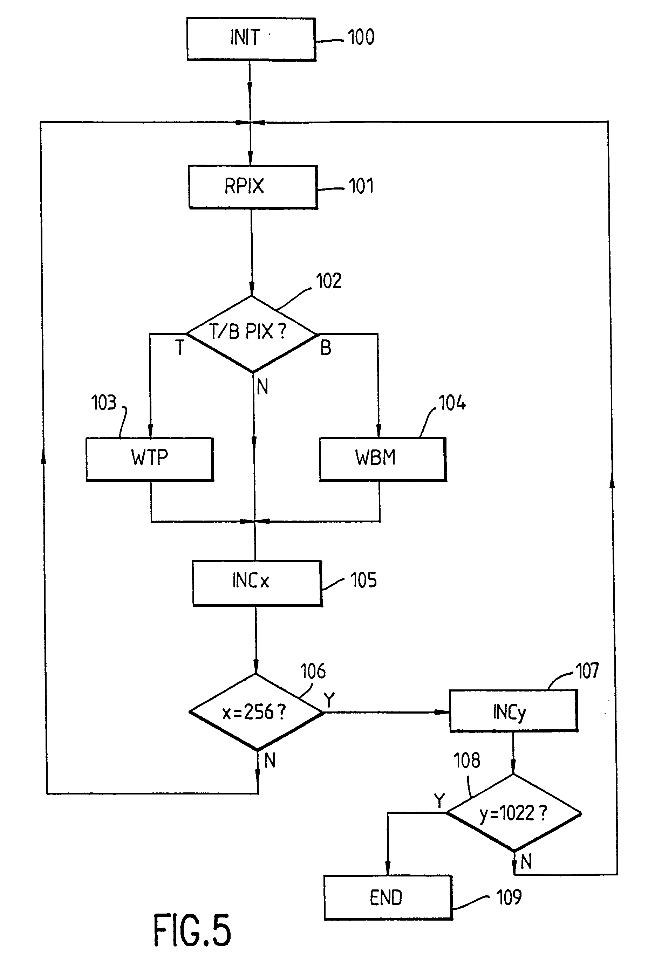

Figure 5 is a flow diagram illustrating the process of determining the top and bottom edge pixels assuming a display memory 256 bytes wide (x direction) and 1024 bytes high (y direction) with x=0, y=0 the top left hand position.

The first step is to initialise, box 100, INIT. which sets x,y to 0,0. The next step is to read pixels x,y and x,(y+1), box 101, RPIX. A decision is then made, box 102, T/B PIX? as to whether the pixel pair x,y and x,(y+1) mark the edge of a shape. This is on the basis of a three way test: the first being if pixel xy is background and pixel x,(y+1) is foreground then x,y is a top edge pixel, the second being if pixel x,y is foreground and pixel x,(y+1) is background then x,y is a bottom edge pixel; and the third being if neither of these conditions apply, that is both pixels are foreground or both pixels are background an edge is not defined. If the result of the first test is positive then top edge is written at pixel x,y, box 103, WTP. If the result of the second test is positive then bottom edge is written at pixel x,y, box 104, WBM. The x coordinate of the picture is then incremented, box 105, INCx, and the procedure restarted with reading pixels (x+1), y and (x+1), (y+1). This procedure is repeated until it is detected that the end of a line is reached, box 106, x=256? when the y value is incremented, box 107, INCy. The INCy instruction also resets the x value to zero. The process then repeats until the test y=1022? gives the answer YES, box 108 when all the pixel pairs in the memory have been checked to determine top and bottom edge pixels and the process ends, box 109, END.

A similar procedure is followed to detect left and right edge pixels but in this case the pixels to be compared are the adjacent pixels along the lines, that is, x,y and (x+1), y. To detect diagonal pixels where left and right edges meet top and bottom edges it is necessary to compare pixels in groups of four arranged 2x2 and where a three foreground and one background or three background, one foreground combination is found the odd pixel is a diagonal. This process can be confined to looking at groups of pixels which contain edge pixels and other groups of pixels need not be checked.

Figure 6 is a flow diagram illustrating the method of vertical scrolling. The first step, box 201, is to read from the input device the scrolling rate and for each frame to compute the vertical position as a line number. The second step, box 202, is to separate the integer and fractional parts of the line number. The integer part is written into the scroll offset register to enable the frame scan to read out that selected part of the display memory 2, box 203. The central processor unit 3 uses the fractional part of the line number to compute the CLUT entries for the top and bottom edge pixels, box 204 and write them into the CLUT 7, box 205. This process is cycled continuously while scrolling is selected by the input device. The necessary calculations can take place for the next frame while the current frame is being displayed so that the updated CLUT entries are ready when the scan begins.

## Claims

1. An apparatus for displaying on a pixel grid image frames representing a foreground image moving over a background image, the movement between frames including a fractional part of the dimensions of a pixel, the apparatus comprising:
- a display memory storing colour codes for the pixels of the foreground image, the stored colour codes defining displayed pixel colours by reference to entries in a colour look-up table (CLUT) of the apparatus, and the display apparatus operating to display the foreground image in the form of pixels coloured in accordance with the stored colour codes;
- means for identifying leading and trailing edge pixels of the foreground image, in accordance with the movement between frames, wherein the edge pixels are identified by stored colour codes distinct from those stored for other i.e. non-edge pixels in the foreground image; and
- means for modifying the displayed colour of the leading and trailing edge pixels in accordance with the fractional part of the movement, by updating the CLUT entries for the edge pixel colour codes between frames;
wherein colour codes for the foreground image pixels are pre-stored including the distinct colour codes for edge pixels, and transferred to the display memory prior to display.

2. An apparatus as claimed in Claim 1 wherein the foreground image comprises a compilation from a set of component parts, the colour codes being pre-stored for the set of component parts and being transferred selectively to assemble the foreground image in the display memory.

3. An apparatus as claimed in Claim 2 wherein the foreground image comprises scrolling text and the set of pre-stored component parts comprises a set of character shapes.

4. An apparatus as claimed in any preceding claim wherein three distinct colour codes are assigned used for non-edge pixels and two classes of edge pixels in respect of at least one direction of movement.

5. An apparatus as claimed in Claim 4 wherein distinct colour codes are assigned for non-edge pixels and four classes of edge pixel, to allow movement in both horizontal and vertical directions.

6. An apparatus as claimed in Claim 5 wherein further colour codes are assigned for corner pixels where two classes of edge pixel overlap, to allow movement which includes both horizontal and vertical components.

7. A method of pre-storing foreground image data for use in an apparatus as claimed in any preceding claim, the method comprising:
- receiving information identifying the pixels of at least a component part of the foreground image;
- detecting leading edge and trailing edge pixels for at least one direction of movement of the foreground image;
- assigning distinct colour codes to the leading edge pixels, the trailing edge pixels and non-edge pixels of the foreground image; and
- storing the colour codes for the pixels of the foreground image, as colour codes for a set of foreground image component parts, in a memory for use in the display apparatus.

8. A method as claimed in Claim 7 wherein the set of component parts comprises a character set for the display of scrolling text.

## Patentansprüche

1. Vorrichtung zur Anzeige von Teilbildern auf einem Bildelementraster, die ein Vordergrundbild darstellen, das sich über ein Hintergrundbild bewegt, wobei die Bewegung zwischen den Teilbildern einen Bruchteil der Größe eines Bildelements beträgt und wobei die Vorrichtung folgendes enthält:
- einen Anzeigespeicher zum Speichern der Farbcodes für die Bildelemente des Vordergrundbildes, wobei die gespeicherten Farbcodes die angezeigten Bildelementfarben durch Bezugnahme auf Einträge in einer Farbtabelle (Colour Look-up Table, CLUT) der Vorrichtung festlegen und die Anzeigevorrichtung so funktioniert, daß sie das Vordergrundbild in Form von Bildelementen anzeigt, deren Farbe mit den gespeicherten Farbcodes übereinstimmt;
- Mittel zum Identifizieren des ersten und des letzten Bildelements des Vordergrundbildes in Übereinstimmung mit der Bewegung zwischen den Teilbildern, wobei die Randbildelemente durch gespeicherte Farbcodes identifiziert werden, die sich von denjenigen unterscheiden, die für andere, d.h. nicht am Rand liegende Bildelemente im Vordergrundbild gespeichert sind;
- Mittel zum Verändern der angezeigten Farbe des ersten und des letzten Bildelements in Übereinstimmung mit dem Bruchteil der Bewegung durch Aktualisierung der CLUT-Einträge für die Farbcodes der Randbildelemente zwischen den Teilbildem;
wobei die Farbcodes für die Vordergrund-Bildelemente einschließlich der unterschiedlichen Farbcodes für die Randbildelemente vorher gespeichert und vor der Anzeige an den Anzeigespeicher übertragen werden.

2. Vorrichtung nach Anspruch 1, wobei das Vordergrundbild eine Kompilierung aus einer Gruppe von Einzelteilen enthält, wobei die Farbcodes für die Gruppe von Einzelteilen vorher gespeichert und selektiv übertragen werden, um das Vordergrundbild im Anzeigespeicher zusammenzusetzen.

3. Vorrichtung nach Anspruch 2, wobei das Vordergrundbild die Verschiebung von Text beinhaltet, und wobei die Gruppe der vorher gespeicherten Einzelteile einen Satz Zeichenformen enthält.

4. Vorrichtung nach einem der vorherigen Ansprüche, wobei drei unterschiedliche Farbcodes für nicht am Rande liegende Bildelemente und zwei Gruppen von Randbildelementen im Hinblick auf mindestens eine Verschiebungsrichtung zugeordnet werden.

5. Vorrichtung nach Anspruch 4, wobei unterschiedliche Farbcodes für nicht am Rande liegende Bildelemente und vier Gruppen von Randbildelementen zugeordnet werden, um eine Verschiebung sowohl in horizontaler als auch in vertikaler Richtung zu ermöglichen.

6. Vorrichtung nach Anspruch 5, wobei weitere Farbcodes für Eckbildelemente zugeordnet werden, wo sich zwei Arten von Randbildelementen überlappen, um eine Verschiebung zu ermöglichen, die sowohl horizontale als auch vertikale Komponenten beinhaltet.

7. Verfahren zum vorhergehenden Speichern von Vordergrund-Bilddaten zur Verwendung in einer Vorrichtung nach einem der vorherigen Ansprüche, wobei das Verfahren folgendes beinhaltet:
- Empfangen von Informationen, die die Bildelemente von zumindestens einem Bestandteil des Vordergrundbildes identifizieren;
- Identifizieren des ersten und des letzten Randbildelements für zumindest eine Bewegungsrichtung des Vordergrundbildes;
- Zuordnen unterschiedlicher Farbcodes zu den ersten Randelementen, den letzten Randbildelementen und den nicht am Rand liegenden Bildelementen des Vordergrundbildes; und
- Speichern der Farbcodes für die Bildelemente des Vordergrundbildes als Farbcodes für eine Gruppe von Einzelteilen des Vordergrundbildes in einem Speicher zur Verwendung in der Anzeigevorrichtung.

8. Verfahren nach Anspruch 7, wobei die Gruppe der Einzelteile einen Zeichensatz für die Anzeige von sich verschiebendem Text enthält.

## Revendications

1. Dispositif pour afficher sur une grille de pixels des trames d'images représentant une image d'avant-plan se déplaçant sur une image de fond, le mouvement entre trames comprenant une partie fractionnaire des dimensions d'un pixel, le dispositif comprenant :
une mémoire d'affichage stockant des codes de couleurs pour les pixels de l'image d'avant-plan, les codes de couleurs stockés définissant des couleurs de pixels affichées par référence à des entrées dans une table de consultation de couleurs (CLUT) du dispositif, et le dispositif d'affichage intervenant pour afficher l'image d'avant-plan sous la forme de pixels colorés selon les codes de couleurs stockés;
des moyens pour identifier les pixels des bords avant et arrière de l'image d'avant-plan en fonction du mouvement entre trames, les pixels des bords étant identifiés par des codes de couleurs stockés distincts de ceux stockés pour d'autres pixels, c'est-à-dire qui ne se trouvent pas sur les bords, dans l'image d'avant-plan, et
des moyens pour modifier la couleur affichée des pixels des bords avant et arrière conformément à la partie fractionnaire du mouvement, en mettant à jour les entrées CLUT pour les codes de couleurs des pixels des bords entre trames;
dans lequel des codes de couleurs pour les pixels de l'image d'avant-plan sont préstockés, notamment les codes de couleurs distincts pour les pixels des bords, et sont transférés à la mémoire d'affichage avant l'affichage.

2. Dispositif selon la revendication 1, dans lequel l'image d'avant-plan comprend une compilation d'un ensemble de parties constituantes, les codes de couleur étant préstockés pour l'ensemble de parties constituantes et étant transférés sélectivement pour assembler l'image d'avant-plan dans la mémoire d'affichage.

3. Dispositif selon la revendication 2, dans lequel l'image d'avant-plan comprend un texte défilant et l'ensemble de parties constituantes préstockées comprend un ensemble de formes de caractères.

4. Dispositif selon l'une quelconque des revendications précédentes, dans lequel trois codes de couleur distincts sont assignés, utilisés pour les pixels qui ne sont pas sur les bords et deux classes de pixels de bords en relation avec au moins une direction de mouvement.

5. Dispositif selon la revendication 4, dans lequel des codes de couleur distincts sont assignés pour les pixels qui ne se trouvent pas sur les bords et quatre classes de pixels de bords pour permettre un mouvement dans les deux directions horizontale et verticale.

6. Dispositif selon la revendication 5, dans lequel d'autres codes de couleur sont assignés pour les pixels de coins où deux classes de pixels de bords se chevauchent, afin de permettre un mouvement qui comprend des composantes à la fois horizontale et verticale.

7. Procédé de préstockage de données d'image d'avant-plan susceptible d'être utilisé dans le dispositif selon l'une quelconque des revendications précédentes, le procédé consistant :
- à recevoir des informations identifiant les pixels d'au moins une partie constituante de l'image d'avant-plan;
- à détecter les pixels des bords avant et arrière pour au moins une direction de mouvement de l'image d'avant-plan;
- à assigner des codes de couleurs distincts aux pixels du bord avant, aux pixels du bord arrière et aux pixels qui ne se trouvent pas sur les bords dans l'image d'avant-plan, et
- à stocker les codes de couleurs pour les pixels de l'image d'avant-plan sous la forme de codes de couleurs pour un ensemble de parties constituantes d'une image d'avant-plan dans une mémoire susceptible d'être utilisée dans le dispositif d'affichage.

8. Procédé selon la revendication 7, dans lequel l'ensemble de parties constituantes comprend un ensemble de caractères pour l'affichage d'un texte défilant.
